# EUROPÄISCHE PATENTANMELDUNG

(11) **EP 0 699 513 A1**
(43) Veröffentlichungstag der Anmeldung: **06.03.1996**
(21) Anmeldenummer: 95112285.2
(22) Anmeldetag: 04.08.1995
(51) Int. Cl.: B29C 45/54

(54) **Vorrichtung zum Einbringen eines Spritzgutes in eine Form**

(30) Priorität: 02.09.1994 DE 4431264
(71) Anmelder: Fahr Bucher GmbH, D-78240 Gottmadingen (DE)
(72) Erfinder: Schmidhalter, Erich, CH-5426 Lengnau (CH)

(57) **Zusammenfassung**

Durch Ausbildung einer Förderschnecke (17) für glasfaserbeladenes Polyestermaterial mit einer Hohlachse kann der Spritzkolben (11) für eine Spritzeinheit (9) im Anschluss an einen Schneckenförderer (8) in kompakter Bauweise durch die Förderschnecke (17) hindurch geführt werden. Zur masseschonenden Verarbeitung auch zäher Polyester- Massen kann der Spritzkolben mit einer Plastifizierschnecke und einem zugehörigen Plastifiziermotor ausgerüstet werden.

## Beschreibung

Die Erfindung betrifft eine Vorrichtung zum Einbringen eines Spritzgutes in eine Form mit einem Schneckenförderer, einer, einen Spritzkolben umfassenden Spritzeinheit, sowie einem Einfüllbehälter für das Spritzgut, z.B. glasfaserbeladenes Polyestermaterial.

Aus DE-GM 92 18 241 (Fahr Bucher) ist eine Vorrichtung zur Beschickung einer Plastifiziereinrichtung bekannt. Dabei wird ein Nachfüllbehälter mit Polyester oder dergleichen Materialien beschickt. An den Nachfüllbehälter angeschlossen ist ein Schneckenförderer, welcher den Polyester einer mit Kolben und Zylinder ausgerüsteten Stopfeinheit zufördert. Die Stopfeinheit wiederum beschickt eine Plastifiziereinrichtung, welche als Spritzeinheit mit einem in einem Plastifizierzylinder verschieblich angeordneten Spritzkolben über eine Spritzdüse den Polyester in eine Spritzform einspritzt. Diese Vorrichtung besitzt einen komplizierten und aufwändigen Aufbau, durch den insbesondere glasfaserbeladene Materialien stark beansprucht werden.

Aus EP-B1 0 078 926 (Hettinga, Siebolt) ist ein Verfahren zum Einspritzen eines Spritzgutes in eine Form bekannt. Das Verfahren arbeitet mit einer umgrenzten Bahn, die eine Schnecke zum Fördern des Spritzgutes umfasst, einer Spritzdüseneinheit und einer Spritzform. Über einen seitwärts vorstehenden Austritt der umgrenzten Bahn wird mittels einer Relativbewegung dieser Bahn gegenüber der Spritzdüseneinheit dieselbe mit Spritzgut angefüllt. Anschliessend wird die aus umgrenzter Bahn und Spritzdüseneinheit bestehende Baugruppe insgesamt an die Spritzform herangefahren und diese wiederum mittels einer Relativbewegung zwischen Bahn und Spritzdüseneinheit aufgefüllt. Auch dieses Verfahren erfordert einen komplizierten Aufbau und beansprucht das Material stark.

Der Erfindung liegt die Aufgabe zugrunde, die genannten Nachteile durch eine Vorrichtung der eingangs erwähnten Art zu vermeiden.

Gemäss der Erfindung wird diese Aufgabe dadurch gelöst, dass die Förderschnecke des Schneckenförderers an den Einfüllbehälter angeschlossen und als Hohlwelle ausgebildet ist, und dass der Spritzkolben diese Hohlwelle durchsetzt und mittels der am Ausgang des Schneckenförderers angeordneten Spritzeinheit das Spritzgut durch Axialbewegung in die Form einbringt.

Es erweist sich dabei als besonders vorteilhaft, wenn die in der Spritzeinheit befindliche Frontseite des Spritzkolbens mit einer Rückstromsperre versehen ist. Weitere bevorzugte Ausführungsformen sind in den Patentansprüchen gekennzeichnet.

Die Erfindung ist in der folgenden Beschreibung und den Zeichnungen, die Ausführungsbeispiele darstellen, näher erläutert.

Es zeigen:
Fig. 1 eine Seitenansicht einer Spritzgiessanlage für Erzeugnisse aus Kunststoff mit Beschickungseinheit, Formeinheit und Formzustelleinheit,
Fig. 2 einen Schnitt durch eine erfindungsgemässe Einspritzvorrichtung der Beschickungseinheit gemäss Fig. 1,
Fig. 3 eine Seitenansicht der Einspritzvorrichtung gemäss Fig. 2,
Fig. 4 einen Schnitt durch eine weitere erfindungsgemässe Einspritzvorrichtung der Beschickungseinheit gemäss Fig. 1; und
Fig. 5 eine Seitenansicht der Einspritzvorrichtung gemäss Fig. 4.

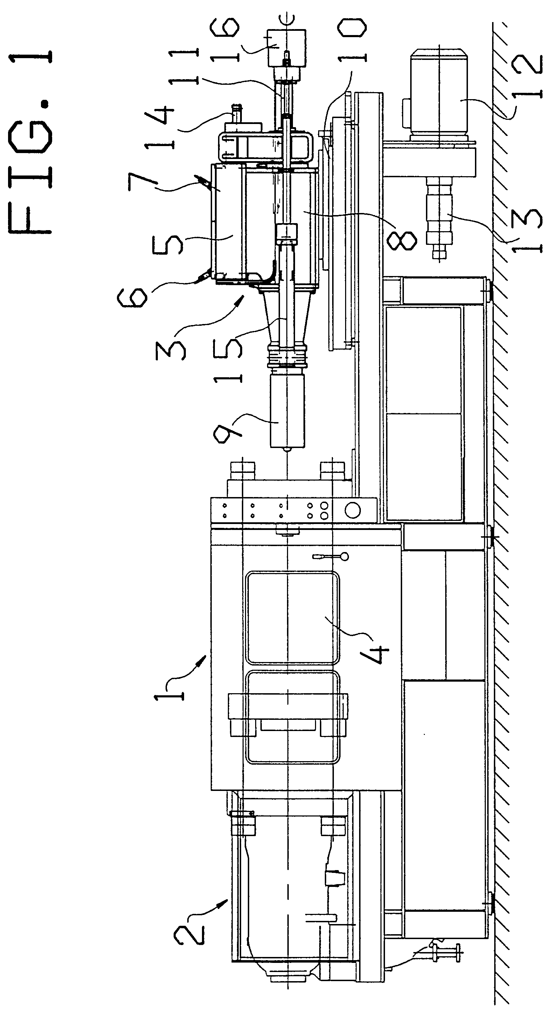

Die in Fig. 1 schematisch dargestellte Spritzgiessanlage umfasst eine Formeinheit 1 zum Einsatz und zur Halterung einer nicht mit gezeigten Spritzform, eine Zustelleinheit 2 für einen Teil der Spritzform und eine erfindungsgemäss ausgebildete Einheit 3 zur Beschickung der Spritzform mit Spritzgut, z.B. mit glasfaserbeladenem Polyestermaterial.

In der Formeinheit 1 wird in einer Öffnung 4 eine nicht gezeigte Spritzform angebracht. Diese Spritzform besteht aus zwei Teilen, welche einen Hohlraum für das zu spritzende Produkt umfassen. Der erste Teil ist an der, der Beschickungseinheit 3 zugewandten Seite angebracht und weist eine Einspritzöffnung für das Polyestermaterial auf. Der zweite Teil der Spritzform steht dem ersten Teil gegenüber und kann mit einer Hydraulik in der Zustelleinheit 2 an den ersten Teil mit einer Druckkraft dichtend herangefahren werden. Nach Fertigstellung des Produktes wird der zweite Teil der Spritzform wieder zurückgefahren, und das fertige Produkt wird ausgestossen.

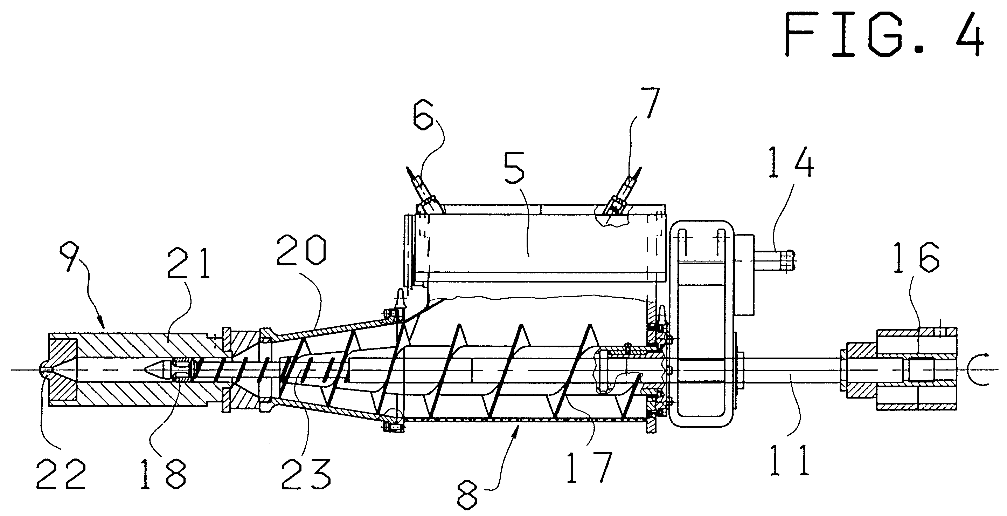

Die Beschickungseinheit 3 umfasst einen Einfüllbehälter 5 für das Spritzgut, an dem zwei Sensoren 6, 7 für die Füllhöhe angebracht sind. Mit Hilfe eines an den Einfüllbehälter 5 angeschlossenen Schneckenförderers 8 wird das Spritzgut in eine Spritzeinheit 9 gefördert. Die Beschickungseinheit 3 wird für den Spritzvorgang auf einem Bett 10 an die in der Formeinheit 1 angebrachte Spritzform herangefahren. Anschliessend wird das Spritzgut mittels eines Spritzkolbens 11 aus der Spritzeinheit 9 in die Spritzform eingespritzt. Wie in Verbindung mit Fig. 4 im Einzelnen beschrieben, kann der Spritzkolben 11 in seinem Bereich zwischen Schneckenförderer 8 und Spritzeinheit 9 mit einer Plastifizierschnecke (23) für das Spritzgut aus dem Schneckenförderer 8 versehen sein.

Für den Antrieb der Bewegungs- und Förderorgane der Beschickungseinheit 3 ist, wie Fig. 1 zeigt, eine, von einem Elektromotor 12 angetriebene Hydraulikpumpe 13 vorgesehen. Von dieser Pumpe 13 führen nicht dargestellte Speiseleitungen zu einem Antriebsmotor 14 für den Schneckenförderer 8, zu zwei Hydraulikzylindern 15 für den Linearantrieb des Spritzkolbens 11 und zu einem Motor 16 zum Betrieb der Plastifizierschnecke des Spritzkolbens 11.

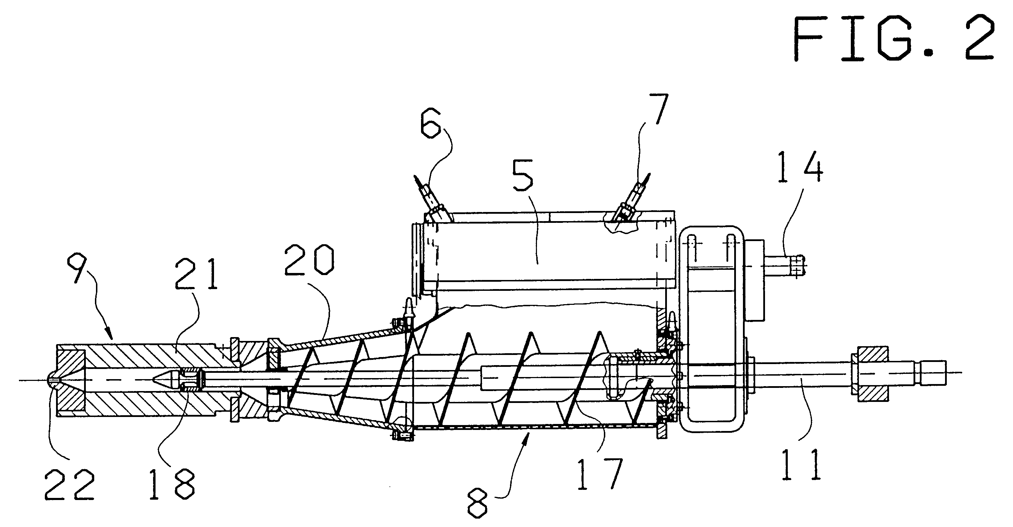

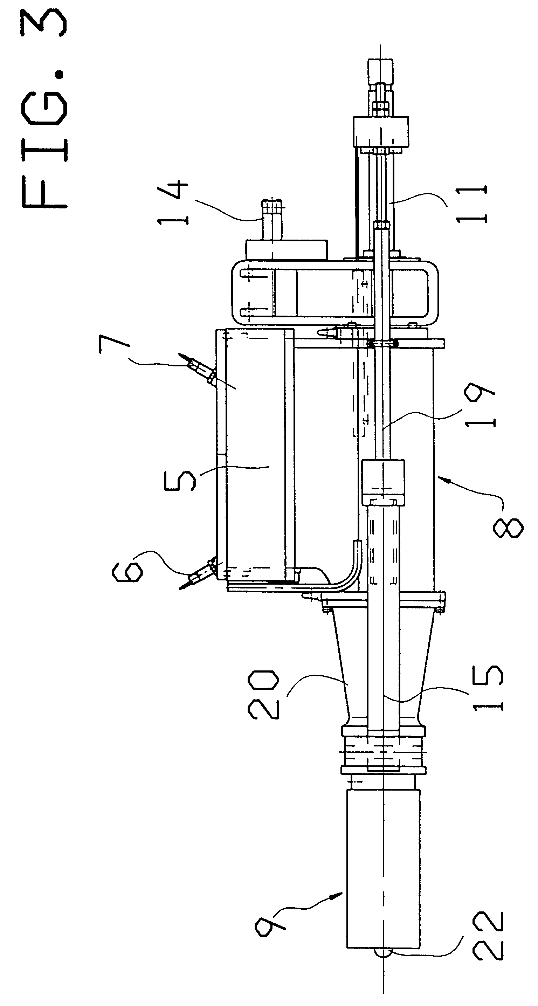

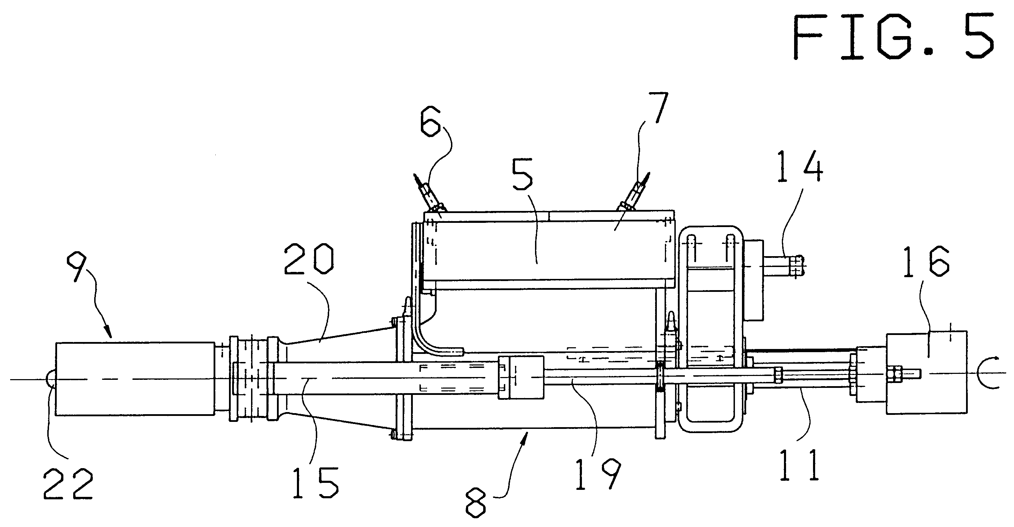

In Fig. 2 ist die erfindungsgemässe Einspritzvorrichtung der Beschickungseinheit 3 in einem detaillierten Teischnitt dargestellt. Die entsprechende Seitenansicht zeigt Fig. 3. Die schon zu Fig. 1 beschriebenen Bauelemente sind in den Fig. 2, 3, 4, 5 mit den gleichen Bezugszeichen bezeichnet. Wie Fig. 2 zeigt, ist im Schneckenförderer 8 eine Förderschnecke 17 vorgesehen, welche mit einer Hohlachse ausgebildet ist. Durch diese Hohlachse ist der Spritzkolben 11 längsverschieblich hindurch geführt. Der Spritzkolben 11 besitzt an seinem Frontende in der Spritzeinheit 9 eine Rückstromsperre 18, und er ist zur Längsverschiebung mit den hydraulischen Antriebszylindern 15 gemäss Fig. 3 über Kolbenstangen 19 verbunden.

Die Förderschnecke 17 zieht das im Einfüllbehälter 5 befindliche Material ein. Durch den Fördervorgang entsteht in Austragsrichtung zur Spritzeinheit 9 eine Kompression, welche Lufteinschlüsse eliminiert und die Masse homogenisiert. In einem nachfolgenden konisch verjüngten Bereich 20 des Schneckenförderers 8 wird der Stopfdruck aufgebaut, welcher die Masse zwischen dem Spritzkolben 11 und einem diesen in einem Abstand umgebenden Plastifizierzylinder 21 hindurch vor die Rückstromsperre 18 schiebt und vor einer Spritzdüse 22 aufstaut. Der Staudruck, gegebenenfalls unterstützt durch eine geregelte Rückzugskraft am Spritzkolben 11, drückt nun denselben soweit zurück, bis genügend Schussvolumen der Masse aufgebaut ist.

Die hydraulischen Antriebszylinder 15 für den Spritzkolben 11 stützen sich direkt am Plastifizierzylinder 21 ab. Dadurch wird der Einfüllbehälter 5 nicht durch die Spritzkraft belastet. Durch einen nicht gezeigten ersten Drucksensor nach dem Ausgang des Schneckenförderers 8 kann der Stopfdruck erfasst und als Regelgrösse für eine Regelung der Förderleistung des Schneckenförderers 8 verwendet werden. Durch einen zweiten Drucksensor vor der Spritzdüse 22 kann der Spritzdruck erfasst werden und als Regelgrösse beim Spritzvorgang zur Regelung eines optimalen und masseschonenden Spritzdruckes dienen.

Mit der Vorrichtung gemäss den Fig. 1, 2, 3 können leichtfliessende Polyester- Massen verarbeitet werden. Um zähere Polyester- Massen oder stäbchenförmige Duroplast-Massen verarbeiten zu können, wird die Vorrichtung gemäss Fig. 4 zweckmässig mit einer Plastifizierschnecke 23 am Spritzkolben 11 im Anschluss an die Rückstromsperre 18 ausgerüstet. Der Motor 16 dient dann dem Betrieb dieser Plastifizierschnecke 23. In dieser Form ist die Vorrichtung auch für geschredderte Massen aus dem Thermo- Recycling einsetzbar, wenn man den Plastifizierzylinder 21 als langen Thermozylinder mit vergrössertem Durchmesser ausbildet.

## Patentansprüche

1. Vorrichtung zum Einbringen eines Spritzgutes in eine Form mit einem Schneckenförderer (8), einer, einen Spritzkolben (11) umfassenden Spritzeinheit (9), sowie einem Einfüllbehälter (5) für das Spritzgut, z.B. glasfaserbeladenes Polyestermaterial, dadurch **gekennzeichnet**, dass die Förderschnecke (17) des Schneckenförderers (8) an den Einfüllbehälter (5) angeschlossen und als Hohlwelle ausgebildet ist, und dass der Spritzkolben (11) diese Hohlwelle durchsetzt und mittels der am Ausgang des Schneckenförderers (8) angeordneten Spritzeinheit (9) das Spritzgut durch Axialbewegung in die Form einbringt.

2. Vorrichtung nach Anspruch 1, dadurch **gekennzeichnet**, dass die in der Spritzeinheit (9) befindliche Frontseite des Spritzkolbens (11) mit einer Rückstromsperre (18) versehen ist.

3. Vorrichtung nach einem der Ansprüche 1 oder 2, dadurch **gekennzeichnet**, dass der Schneckenförderer (8) ausgangsseitig einen konisch verjüngten Bereich (20) zur Erhöhung des Stopfdruckes aufweist.

4. Vorrichtung nach Anspruch 1, dadurch **gekennzeichnet**, dass die Spritzeinheit (9) vor der Spritzdüse (22) einen Plastifizierzylinder (21) aufweist, dessen Volumen mindestens dem Hohlraum der Spritzform entspricht und welcher vor dem Einspritzvorgang durch den Schneckenförderer (8) mit Spritzgut aufgefüllt wird, wobei der in den Plastifizierzylinder (21) mit Spiel eingepasste Spritzkolben (11) das Spritzgut durchlässt und in eine Ausgangsposition für seine axiale Spritzbewegung zurückgeschoben wird.

5. Vorrichtung nach den Ansprüchen 2 und 4, dadurch **gekennzeichnet**, dass der Spritzkolben (11) mit seiner frontseitigen Rückstromsperre (18) in den Plastifizierzylinder (21) dicht eingepasst ist und im Anschluss an die Rückstromsperre (18) eine Plastifizierschnecke (23) aufweist, welche bei einer Drehbewegung des Spritzkolbens (11) das Spritzgut vom Schneckenförderer (8) durch die Rückstromsperre (18) hindurch in den Plastifizierzylinder (21) einbringt.

6. Vorrichtung nach einem der Ansprüche 1 bis 5, dadurch **gekennzeichnet**, dass dem Ausgang des Schneckenförderers (8) ein erster Drucksensor nachgeordnet ist, dessen Ausgangssignal eine Regelschaltung beaufschlagt, welche die Förderleistung des Schneckenförderers (8) in Abhängigkeit vom Druck des Spritzgutes regelt.

7. Vorrichtung nach einem der Ansprüche 1 bis 6, dadurch **gekennzeichnet**, dass im Spritzgut vor dessen Austritt aus der Spritzeinheit (9) ein zweiter Drucksensor angeordnet ist, dessen Ausgangssignal eine Regelschaltung beaufschlagt, welche die Druckkraft am Spritzkolben (11) in Abhängigkeit vom Druck des Spritzgutes regelt.
